# FASCICULE DE BREVET EUROPEEN

(11) **EP 0 784 024 B1**
(45) Date de publication et mention de la délivrance du brevet: **24.03.1999**
(21) Numéro de dépôt: 97400036.6
(22) Date de dépôt: 08.01.1997
(51) Int. Cl.: B65D 83/70, F16K 17/38

(54) **Distributeur de produit de consistance liquide à pâteuse comportant un dispositif de sécurité**
Mit einer Sicherheitsvorrichtung versehener Spender für flüssige bis pastöse Produkte
Dispenser for liquid or pasty product with a safety device

(30) Priorité: 10.01.1996 FR 9600221
(43) Date de publication de la demande: 16.07.1997
(73) Titulaire: L'OREAL, 75008 Paris (FR)
(72) Inventeur: Yquel, Jean-Pierre, 92700 Colombes (FR); Lasserre, Pierre-André, 93470 Coubron (FR)
(74) Mandataire: Boulard, Denis

(56) Documents cités:
- DE-U- 9 111 351
- FR-A- 2 214 288
- FR-A- 2 685 303
- US-A- 4 407 432
- US-A- 5 154 201
- PATENT ABSTRACTS OF JAPAN vol. 014, no. 513 (C-0777), 9 Novembre 1990 & JP 02 214555 A (TOYO SEIKAN KAISHA LTD;OTHERS: 01), 27 Août 1990,

## Description

La présente invention se rapporte à un récipient sous pression contenant un produit fluide à distribuer et un gaz propulseur, ce récipient étant équipé d'un dispositif de sécurité évitant les risques de surpression lorsque la température ambiante monte. L'invention vise, plus particulièrement, l'utilisation d'un récipient réalisé en un matériau métallique ou plastique, muni d'un tel dispositif de sécurité.

Généralement, les récipients sous pression de ce genre sont utilisés dans différents domaines d'application, et contiennent, par exemple des produits cosmétiques, des produits techniques ou des produits ménagers. Ces produits ne sont pas toujours utilisés dans des conditions idéales. En effet, il est assez fréquent qu'un tel produit soit stocké et/ou utilisé à des températures élevées, par exemple en plein soleil.

On sait que la pression interne d'un récipient sous pression augmente sensiblement avec l'augmentation de la température ambiante, notamment, lorsqu'il contient un gaz propulseur liquéfié. Dans des conditions extrêmes, la surpression provoquée par une température élevée risque alors de faire éclater le récipient, et donc de provoquer des blessures à l'utilisateur.

Généralement, les récipients sous pression utilisés actuellement pour la distribution d'un produit fluide sont constitués par un bidon en aluminium ou en fer blanc, dans lequel est conditionné ledit produit. Ces bidons en métal ne sont pas sensibles à la chaleur.

Les bidons sous pression en matière plastique ne sont pas utilisés actuellement, car on sait, également, que les matériaux plastiques destinés à ces bidons ne supportent pas les températures élevées. En effet, ces matériaux plastiques commencent à se ramollir au dessus d'une température de seuil critique (à partir de 50°C, notamment).

Lorsqu'on veut remplacer un récipient en métal par un récipient en plastique, un certain nombre de précautions doit donc être pris. Pour éviter tout risque de détérioration du récipient, il est nécessaire, par exemple, d'effectuer une dépressurisation du récipient avant que l'intérieur du récipient n'atteigne accidentellement la température critique, cette dépressurisation devant se produire à une température déterminée, de façon extrêmement fiable et reproductible.

On a déjà proposé, par exemple dans le document FR-A-2 685 303, au nom de la demanderesse, un récipient comportant un dispositif de sécurité assurant cette dépressurisation. Ce dispositif est muni d'une paroi comportant un orifice fermé par un bouchon élastomérique, la mise à la pression atmosphérique se faisant par rupture, à l'aide d'un élément fixe, d'une zone fragile du bouchon, cette zone étant disposée dans le récipient et se déplaçant sous la seule influence de la pression interne. Des essais ont cependant montré que les conditions de rupture de la zone fragile sont difficilement maîtrisables, de façon fiable. De plus, le montage d'un tel bouchon entraîne des coûts de fabrication supplémentaires, relativement élevés.

Par ailleurs, le document DE-U-91 11 351 décrit un récipient sous pression selon le préambule de la revendication 1, comportant une valve dont la tige de manoeuvre comporte une cloison interne, frangible lorsque un seuil de pression déterminé est atteint à l'intérieur du récipient. Comme dans le cas du dispositif décrit ci-dessus, le seuil d'ouverture du dispositif de sécurité est difficilement maîtrisable.

On connaît, en outre, par le document US-A-4 407 432, un récipient sous pression comportant un dispositif de mise à la pression atmosphérique et un bouton poussoir monté sur une valve de distribution, ce récipient, lorsque une température de seuil prédéterminé est atteinte, augmentant de volume. Le récipient est monté dans un bâti de sorte que, par l'augmentation du volume du récipient, une pression est exercée sur le bouton poussoir provoquant l'éjection du produit par la valve en direction du bouton poussoir. Le bouton poussoir comporte un conduit de distribution et un canal de mise à la pression atmosphérique obturé par un bouchon thermofusible. Lorsque la température critique est atteinte, ce bouchon fond et provoque la dépressurisation du récipient. Le récipient monté dans le bâti présente l'inconvénient d'être encombrant, peu pratique et coûteux.

A la recherche d'un dispositif de sécurité de grande fiabilité et facile à utiliser, la demanderesse a trouvé, qu'en utilisant une valve munie d'un dispositif de sécurité comportant un bouchon en un matériau thermodéformable, voire thermofusible, à une température de seuil déterminée, on pouvait maîtriser, de manière surprenante, avec une grande fiabilité, la surpression accidentelle dans un récipient sous pression provoquée par un excès de chaleur. Par ailleurs, la solution proposée par la présente invention est simple à réaliser et est, en outre, économiquement avantageuse.

L'objet de la présente invention est donc relatif à un récipient sous pression contenant un produit fluide à distribuer et un gaz propulseur, ce récipient étant équipé d'un dispositif de sécurité thermosensible.

Aussi, la présente invention à pour objet un récipient sous pression contenant un produit fluide à distribuer et un gaz propulseur, ce récipient étant équipé d'une valve de distribution du produit, la valve étant munie d'un dispositif de sécurité apte à commander l'ouverture de la valve et à mettre l'intérieur du récipient en communication permanente avec l'atmosphère. Ce récipient se caractérise en ce que ledit dispositif de sécurité est thermosensible de manière à commander l'ouverture de la valve, lorsque la température à l'intérieur du récipient dépasse une température de seuil prédéterminée.

Généralement, le récipient comporte un fond et, le cas échéant, une coupelle de fixation montée du côté opposé au fond, destinée à fixer la valve de distribution sur le récipient.

Avantageusement le dispositif de sécurité est constitué par un bouchon (ou une cloison) en matériau thermodéformable à au moins ladite température de seuil, ce bouchon (ou la cloison) obturant, à la température ambiante, un orifice mettant en communication l'intérieur du récipient avec l'atmosphère, et libérant cet orifice, lorsque la température de seuil est dépassée.

Cet orifice est, en particulier, ménagé dans une paroi d'une tige d'actionnement montée coulissante dans la valve, cette tige étant apte à provoquer, lors de son actionnement, l'éjection d'une dose de produit. Plus précisément, ledit orifice est pratiquée dans la partie de la tige de valve qui est logée à l'intérieur du corps de valve. L'actionnement de la valve est effectué, de préférence, par enfoncement axial de la tige de manoeuvre. Il est cependant envisageable également, de choisir une tige susceptible d'être actionnée par basculement latéral. Selon l'invention, l'orifice peut être ménagé, soit au fond de la tige, soit dans sa paroi latérale.

De façon avantageuse, le diamètre de l'orifice peut varier entre 0,1 mm et 2,5 mm. Cet orifice est obturé par un bouchon en matériau thermodéformable, voire thermofusible.

Ainsi, lorsque le récipient est exposé à une source de chaleur, la température interne du récipient monte, entraînant une augmentation de la pression interne. Lorsque la température de seuil est atteinte ou dépassée, le matériau thermodéformable se ramollit ou se liquéfie et libère le passage entre l'intérieur du récipient et l'atmosphère. Le dispositif de sécurité de l'invention devient alors opérationnel. Sous la poussée de la pression interne, le gaz propulseur et/ou le produit s'échappent dans l'atmosphère, via le tige de valve, jusqu'à la dépressurisation complète du récipient.

Selon les deux modes de réalisation ci-dessus, le matériau thermodéformable constituant le bouchon est choisi, avantageusement, parmi les matériaux ayant un point de ramollissement, voire de fusion, compris dans la gamme allant de 45°C à 85°C. En dessous de cette température, ce matériau est solide, capable d'adhérer solidement à la paroi entourant l'orifice. De préférence ce matériau thermodéformable est un matériau thermofusible. Il est choisi, plus précisément parmi les matériaux dont le point de ramollissement ou de fusion est inférieur à celui du matériau constitutif de la paroi du récipient.

Avantageusement, le matériau thermodéformable ou thermofusible est choisi parmi les alliages de métaux, les polymères, les cires, les paraffines ou leurs associations. En particulier, ce matériau peut être choisi parmi les polymères du type copolymère éthylène/acétate de vinyle ; les polymères et les résines époxydes à deux composants ayant une température de transition vitreuse comprise entre 20°C et 85°C, et de préférence entre 45°C et 80°C ; les résines réticulables sous l'action d'une source ultraviolet ; les cires synthétiques telles que les produits 〈〈 Dapral^{(TM)} W440 〉〉 et 〈〈 Dapral^{(TM)} W447 〉〉 vendus par la société AKZO-NOBEL ou 〈〈 Cire BJ^{(TM)} 〉〉 vendu par la société HOECHST; les cires naturelles telles que la cire d'abeille, la cire de carnauba ou la cire de candellila ; les paraffines ayant un point de fusion compris entre 60°C et 80°C ; l'alliage de Wood (50% de Bi, 25% de Pb, 12,5% de Sn et 12,5% de Cd) ; l'alliage de Lipowitz (50% de Bi, 26,7% de Pb, 13,3% de Sn et 10% de Cd) ; les eutectiques tel que l'eutectique binaire d'In (67%) et de Bi (33%), l'eutectique ternaire d'In (51%), de Bi (32,5%) et de Sn (16,5%) et l'eutectique quaternaire de Bi(49,5%), de Pb (17,5%), de Sn (11,6%) et de In (21,3%).

Selon une autre variante de réalisation, le bouchon peut être constitué par une membrane, obturant le passage interne de la tige de valve, apte à se ramollir lorsque la température interne du récipient dépasse la température de seuil. L'augmentation de la température entraîne, dans ce cas, une augmentation de la pression interne du récipient provoquant la déformation et le déplacement de la membrane, un trocart étant prévu pour percer la membrane, lorsque ce déplacement se produit. Avantageusement, ce trocart présente un passage interne creux, une de ses extrémités communiquant avec l'extérieur du récipient. Après le perçage de la membrane par le trocart, le gaz en surpression passe par l'ouverture ainsi crée, puis s'échappe dans l'atmosphère via le passage interne du trocart.

Quel que soit le mode de réalisation du dispositif de sécurité selon l'invention, le récipient peut être réalisé, avantageusement, en un matériau plastique, tel que par exemple le PET (polyéthylène-téréphthalate), le PEN (polyéthylène naphtalate) ou le PMP (polyméthyl pentène), mais il peut, également, être réalisé en aluminium, en fer blanc ou en verre.

Pour mieux faire comprendre la présente invention, on va décrire maintenant, à titre d'exemples purement illustratifs et nullement limitatifs, plusieurs modes de réalisation de l'invention, représentés sur les dessins annexés.
La figure 1 représente une coupe axiale partielle d'un récipient sous pression, muni d'une valve équipée d'un dispositif de sécurité, conforme à l'invention comprenant un bouchon thermofusible.
La figure 2 représente une coupe axiale partielle d'un récipient sous pression, muni d'une valve conforme à l'invention, suivant une variante de réalisation de la figure 1.
La figure 3 représente une coupe axiale partielle d'un récipient sous pression, muni d'une valve conforme à l'invention, suivant une autre variante de réalisation de la figure 1.

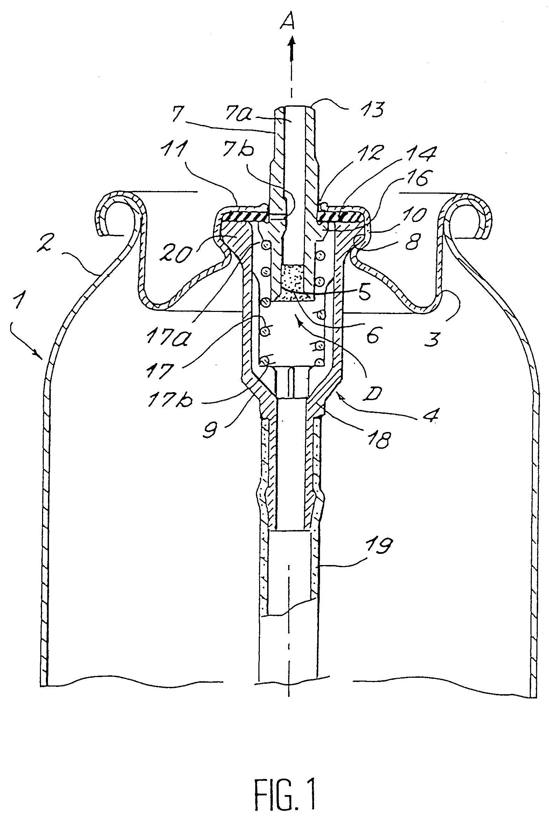

Sur la figure 1, on voit, en coupe longitudinale partielle, un récipient 1 cylindrique allongé selon un axe longitudinal A, comportant un col 2, sur lequel est fixé, par sertissage ou dudgeonnage, une coupelle porte-valve métallique 3, classique. Ce récipient contient un produit liquide à distribuer mis sous pression par un gaz propulseur. La coupelle 3 présente en son centre un logement 8 pour recevoir une valve 4. Ce logement 8 est délimité radialement par une paroi 10, cylindrique de révolution autour de l'axe A. Cette paroi 10 est prolongée par une paroi supérieure 11 généralement plane et perpendiculaire à l'axe A, traversée en son centre par un passage 12. La coupelle 3 peut être réalisée par découpage et emboutissage d'un disque métallique.

La valve 4 comporte un corps de valve 9 et une tige de manoeuvre 7 capable d'être déplacée dans ce corps selon l'axe A. La tige 7 traverse le passage 12 de la coupelle 3. Un canal de distribution 7a est ménagé dans la tige 7 pour l'acheminement du produit à distribuer vers l'extérieur. Ce canal 7a, pourvu à sa partie inférieure d'un orifice 5, et obturé au moyen d'un bouchon 6, est un passage borgne s'étendant selon la direction de l'axe A, relié à un canal radial 7b traversant la paroi de la tige 7. Le canal borgne 7a débouche sur l'extrémité émergente 13 de la tige 7 située à l'extérieur du récipient. Le canal radial 7b débouche à son extrémité externe, en position de repos de la valve, au droit d'un joint d'étanchéité annulaire 14, ou en position de distribution, dans une chambre de valve 15 à l'intérieur du corps de valve 9.

La tige est munie d'une saillie radiale 16 s'appliquant, en position de fermeture de la valve, contre le joint 14. Cette saillie 16, sur le bord tourné vers le récipient, est en appui élastique contre une extrémité 17a d'un ressort hélicoïdal 17 constituant des moyens élastiques de rappel.

Le corps de valve 9 est sensiblement cylindrique et comporte un fond ouvert 18 raccordé à un tube plongeur 19 apte à mettre en communication la chambre de valve 15 avec le produit contenu dans le récipient 1. Ce fond supporte l'autre extrémité 17b du ressort 17, via des ailettes 21.

Du côté opposé au fond, le corps 9 comporte, en outre, un bourrelet annulaire externe 20, engagé dans le logement 8 de la coupelle 3 et en appui étanche contre la périphérie du joint 14. Le joint annulaire 14 s'applique contre la paroi 11 de la coupelle et vient à sa périphérie au contact avec la paroi 10. L'ajustement entre le joint 14 et la tige 7 est serré de manière à assurer un coulissement étanche de cette dernière.

Le fond de la tige 7 est fermé par le bouchon 6. Ce bouchon est constitué par un matériau thermodéformable ou thermofusible, par exemple par du polyéthylène téréphtalate. Le reste de la tige 7 est en matériau plastique rigide, par exemple en polypropylène.

L'ouverture de cette valve s'effectue de façon classique par enfoncement de la tige. Lors de cet enfoncement, le canal radial 7b est dégagé et le produit, sous la poussée du gaz propulseur, s'écoule par le passage axial 7a via la chambre de valve 15.

Le bouchon 6 constitue un dispositif de sécurité D conforme à l'invention, dont le fonctionnement est le suivant. En effet, lorsque l'intérieur du récipient atteint une température élevée, par exemple 60 °C, le matériau du bouchon 6 fond. Le fond de la tige 7 est alors dégagé, et le gaz propulseur en surpression peut s'échapper par le canal axial 7a, jusqu'à vidange complète de gaz.

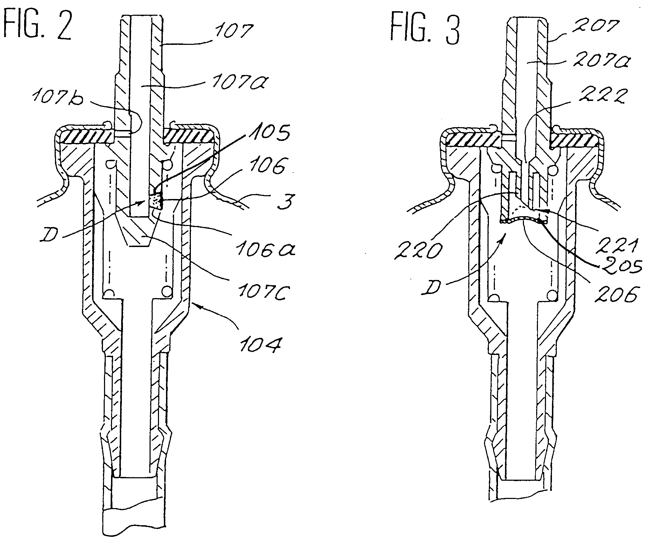

La figure 2 représente une variante de réalisation du dispositif de sécurité de la figure 1. Les parties identiques ou jouant un rôle analogue portent les mêmes références que celles de la figure 1, majorées de 100. La description des parties identiques ne sera reprise que succinctement.

Ainsi, la figure 2 montre une valve 104 sertie dans une coupelle 3. Par rapport à la figure 1, seule la tige de manoeuvre 107 est différente de la tige 7 de la figure 1. Elle porte un fond fermé 107c moulé monobloc avec le reste de la tige. A proximité de ce fond 107c, une ouverture latérale 105 est prévue dans la paroi de la tige communiquant avec un passage axial borgne 107a de la tige.

L'ouverture 105 est fermée par un bouchon 106 réalisé par un matériau thermodéformable ou thermofusible, de façon analogue au bouchon 6 de la réalisation de la figure 1. Ce bouchon 106 constitue un dispositif de sécurité D conforme à l'invention, dont le fonctionnement est semblable à celui de la figure 1.

La valve 204 représentée sur la figure 3 comporte un dispositif de sécurité D où, par rapport à la réalisation de la figure 1, le bouchon 6 a été remplacé par une membrane 206 bouchant un canal axial 207a de la tige 207.

La membrane 206 est constituée par une feuille mince thermodéformable, par exemple en polyéthylène téréphtalate, dont le point de ramollissement est d'environ 65°C. A proximité de cette membrane, la tige 207 comporte un trocart creux 220, dont la pointe 221 est dirigée vers la membrane. L'intérieur 222 de ce trocart communique avec le canal axial 207a de la tige 207.

Le fonctionnement du dispositif de sécurité D de la figure 3 est le suivant. Lorsqu'à l'intérieur du récipient une température seuil est dépassée, par exemple 65°C, la membrane 206 subit une élongation et avance, sous l'action de la pression, en direction du trocart 220, comme représenté par une ligne pointillée. Celui-ci perce la membrane 206, et le gaz propulseur en surpression s'échappe du récipient jusqu'à la dépressurisation totale du récipient, via le trocart creux.

La distance entre la membrane 206 et la pointe 221 est calculée de sorte que l'élongation de la membrane soit suffisante pour amener celle-ci au contact de la pointe 221.

## Revendications

1. Récipient (1) sous pression contenant un produit fluide à distribuer et un gaz propulseur, ce récipient étant équipé d'une valve de distribution du produit, la valve étant munie d'un dispositif de sécurité (D) apte à commander l'ouverture de la valve et à mettre l'intérieur du récipient en communication permanente avec l'atmosphère, caractérisé en ce que ledit dispositif de sécurité (D) est thermosensible, de manière à commander l'ouverture de la valve, lorsque la température à l'intérieur du récipient dépasse une température de seuil prédéterminée.

2. Récipient selon la revendication 1, caractérisé en ce que le dispositif de sécurité (D) est constitué par un bouchon (6, 106, 206) en matériau thermodéformable à au moins ladite température de seuil, ce bouchon obturant, à la température ambiante, au moins un orifice (5, 105, 205) mettant en communication l'intérieur du récipient avec l'atmosphère, et libérant cet orifice, lorsque la température de seuil est dépassée.

3. Récipient selon la revendication 2, caractérisé en ce que l'orifice (5, 105, 205) est ménagé dans une tige d'actionnement (7) montée coulissante dans la valve (4), cette tige étant apte à provoquer, lors de son actionnement, l'éjection d'une dose de produit.

4. Récipient selon l'une des revendications 2 ou 3, caractérisé en ce que le matériau thermodéformable est choisi parmi les matériaux ayant un point de ramollissement compris dans la gamme allant de 45°C à 85°C.

5. Récipient selon l'une des revendications 2 à 4, caractérisé en ce que le matériau thermodéformable est choisi parmi les alliages, les cires synthétiques et naturelles, les paraffines et les polymères.

6. Récipient selon l'une des revendications 2 à 4, caractérisé en ce que le matériau thermodéformable est un matériau thermofusible.

7. Récipient selon l'une des revendications 2 à 6, caractérisé en ce que le matériau thermodéformable est choisi parmi les polymères de polyéthyléne téréphtalate, les copolymères d'éthylène/acétate de vinyle, les résines époxydes à deux composants, les résines réticulables, les cires d'abeille, de carnauba ou de candellila, les alliages de Bi et/ou de Pb et/ou de Sn et/ou de Cd et/ ou de In.

8. Récipient selon l'une des revendications 2 à 4, caractérisé en ce que le bouchon est constitué par une membrane (206), apte à se ramollir lorsque la température interne du récipient dépasse la température de seuil l'augmentation de la température entraînant une augmentation de la pression interne du récipient provoquant le déplacement de la membrane, un trocart (220) étant prévu pour percer la membrane lorsque ce déplacement se produit.

9. Récipient (1) selon l'une des revendications précédentes, caractérisé en ce qu'il est réalisé en matériau plastique.

10. Récipient (1) selon l'une des revendications précédentes, caractérisé en ce qu'il est réalisé en un matériau choisi parmi le polyéthylène-téréphthalate, le polyéthylène naphtalate et le polyméthyl pentène.

## Claims

1. Pressurized container (1) containing a fluid product to be dispensed and a propellent gas, this container being equipped with a valve for dispensing the product, the valve being equipped with a safety device (D) capable of making the valve open and placing the inside of the container in permanent communication with the atmosphere, characterized in that the said safety device (D) is heat-sensitive, so as to make the valve open when the temperature inside the container exceeds a predetermined threshold temperature.

2. Container according to Claim 1, characterized in that the safety device (D) consists of a plug (6, 106, 206) made of a material that deforms under the action of heat at least at the said threshold temperature, this plug, at ambient temperature, plugging at least one orifice (5, 105, 205) that places the inside of the container in communication with the atmosphere and uncovering this orifice when the threshold temperature is exceeded.

3. Container according to Claim 2, characterized in that the orifice (5, 105, 205) is formed in an actuating stem (7) mounted to slide in the valve (4), this stem being capable, when actuated, of causing a dose of product to be ejected.

4. Container according to either of Claims 2 and 3, characterized in that the material that deforms under the action of heat is chosen from materials which have a softening point that lies within the range from 45°C to 85°C.

5. Container according to one of Claims 2 to 4, characterized in that the material that deforms under the action of heat is chosen from alloys, synthetic and natural waxes, paraffins and polymers.

6. Container according to one of Claims 2 to 4, characterized in that the material that deforms under the action of heat is a material that can be melted.

7. Container according to one of Claims 2 to 6, characterized in that the material that deforms under the action of heat is chosen from polyethylene terephthalate polymers, ethylene/vinyl acetate copolymers, two-part epoxy resins, crosslinkable resins, beeswax, carnauba or candellila wax, and alloys of Bi and/or Pb and/or Sn and/or Cd and/or In.

8. Container according to one of Claims 2 to 4, characterized in that the plug is made of a membrane (206) likely to soften when the internal temperature in the container exceeds the threshold temperature, the increase in temperature giving rise to an increase in the internal pressure in the container and displacing the membrane, a trocar (220) being provided for piercing the membrane when this displacement occurs.

9. Container (1) according to one of the preceding claims, characterized in that it is made of plastic.

10. Container (1) according to one of the preceding claims, characterized in that it is made of a material chosen from polyethylene terephthalate, polyethylene naphthalate and polymethyl pentene.

## Patentansprüche

1. Unter Druck stehender Behälter (1) der ein fluides auszugebendes Produkt und ein Treibgas enthält, wobei der Behälter mit einem Ausgabeventil des Produkts versehen ist, wobei das Ventil mit einer Sicherheitsvorrichtung (D) versehen ist, die in der Lage ist, die Öffnung des Ventils zu steuern und das Innere des Behälters in permanente Verbindung mit der Atmosphäre zu setzen, dadurch gekennzeichnet, daß die Sicherheitsvorrichtung (D) Wärmeempfindlich ist, derart, daß sie das Öffnen des Ventils hervorruft, wenn die Temperatur im Inneren des Behälters einen vorbestimmten Temperaturschwellwert übersteigt.

2. Behälter nach Anspruch 1, dadurch gekennzeichnet, daß die Sicherheitsvorrichtung (D) aus einem Stopfen (6, 106, 206) aus wärmeverformbarem Material bei wenigstens der Schwellwerttemperatur gebildet ist, wobei der Stopfen bei Umgebungstemperatur wenigstens eine Öffnung (5, 105, 205) bedeckt, die das Innere des Behälters mit der Atmosphäre in Verbindung setzt, und diese Öffnung freigibt, wenn die Schwellwerttemperatur überstiegen ist.

3. Behälter nach Anspruch 2, dadurch gekennzeichnet, daß die Öffnung (5, 105, 205) in einer Betätigungsstange (7) ausgebildet ist, die gleitbeweglich in dem Ventil (4) angeordnet ist, wobei diese Stange in der Lage ist, bei ihrer Betätigung das Auswerfen einer Dosis des Produkts hervorzurufen.

4. Behälter nach Anspruch 2 oder 3, dadurch gekennzeichnet, daß das wärmeverformbare Material aus den Materialien gewählt wird, die einen Erweichungs- oder Plastifizierungspunkt in einem Bereich von 45°C bis 85°C haben.

5. Behälter nach einem der Ansprüche 2 bis 4, dadurch gekennzeichnet, daß das wärmeverformbare Material gewählt wird aus den Legierungen, den synthetischen und natürlichen Wachsen, den Parafinen und den Polymeren.

6. Behälter nach einem der Ansprüche 2 bis 4, dadurch gekennzeichnet, daß, das wärmeverformbare Material ein wärmeschmelzbares Material ist.

7. Behälter nach einem der Ansprüche 2 bis 6, dadurch gekennzeichnet, daß das wärmeverformbare Material ausgewählt wird unter den Polymeren des Polyethylenterephtalates, der Kopolymere des Ethylens/Phenylacetats, den Epoxydharzen mit zwei Komponenten, den Bienenwachsen, Carnaubawachsen oder Candellilawachsen in Legierungen aus Bi und/oder Pb und/oder Sn und/oder Cd und/oder In.

8. Behälter nach einem der Ansprüche 2 bis 4, dadurch gekennzeichnet, daß der Stopfen aus einer Membran (206) gebildet ist, die in der Lage ist, sich zu erweichen, wenn die innere Temperatur des Behälters über die Schwellwerttemperatur steigt, wobei der Anstieg der Temperatur ein Anstieg des inneren Druckes des Behälters mit sich bringt, wodurch die Bewegung der Membran hervorgerufen wird, wobei eine Spitze (trocart) (220) vorgesehen ist, um die Membran zu durchstoßen, wenn diese Bewegung erzeugt wird.

9. Behälter (1) nach einem der vorhergehenden Ansprüche, dadurch gekennzeichnet, daß er aus einem Kunststoffmaterial gebildet ist.

10. Behälter (1) nach einem der vorhergehenden Ansprüche, dadurch gekennzeichnet, daß er aus einem Material gebildet wird ausgewählt aus dem Polyethylenterephtalat, dem Polyethylennaphtalat und dem Polymetylpenten.
